# EUROPÄISCHE PATENTSCHRIFT

(11) **EP 1 530 895 B1**
(45) Veröffentlichungstag und Bekanntmachung des Hinweises auf die Patenterteilung: **26.09.2012**
(21) Anmeldenummer: 04105702.7
(22) Anmeldetag: 11.11.2004
(51) Int. Cl.: A01F 12/16

(54) **Mähdrescher mit Steinfalle**
Combined harvester stone trap
Moissoneuse batteuse à recueil de cailloux

(30) Priorität: 14.11.2003 DE 10353339
(43) Veröffentlichungstag der Anmeldung: 18.05.2005
(73) Patentinhaber: DEERE & COMPANY, Moline, Illinois 61265-8098 (US)
(72) Erfinder: Schmitt, Wolfgang, 66538, Neunkirchen (DE)
(74) Vertreter: Holst, Sönke

(56) Entgegenhaltungen:
- EP-A- 0 516 892
- EP-A- 0 532 072
- FR-A- 2 141 075
- US-A- 4 446 875

## Beschreibung

Die Erfindung betrifft einen Mähdrescher nach dem Oberbegriff des Anspruchs 1.

Bei der Ernte in Schwaden abgelegten Ernteguts mit einem dem Erntevorsatz eines Mähdreschers vorgeordneten Aufnehmer oder beim Schneiden des Ernteguts in der Nähe des Bodens mit einem Schneidwerk können unbeabsichtigt Steine und andere harte Fremdobjekte aufgenommen und der Drescheinrichtung zugeführt werden, die dadurch schwer beschädigt werden kann. Um zu verhindern, dass diese Fremdobjekte in die Drescheinrichtung eintreten, werden Mähdrescher in der Regel mit einer trogförmigen Steinfalle ausgestattet, die zwischen der Drescheinrichtung und dem Schrägförderer angeordnet ist, der Erntegut von der Erntegutaufnahmeeinrichtung zur Drescheinrichtung fördert. In Richtung auf die Drescheinrichtung geförderte Fremdobjekte treffen auf die Dreschleisten und werden im Ergebnis in die Steinfalle geworfen.

Ein Mähdrescher mit einer Steinfalle ist in der EP 0 532 072 A beschrieben. Die zwischen dem Auslass des Schrägförderers und dem Einlass der Drescheinrichtung angeordnete Steinfalle umfasst eine Vorderwand und eine Rückwand, die in ihrer Arbeitsposition eine V-Form bilden.

In einer ersten Ausführungsform erstreckt sich die Vorderwand etwa vertikal unterhalb des Auslasses des Schrägförderers und ist an ihrer Unterseite um eine horizontal und quer zur Vorwärtsrichtung verlaufende Achse schwenkbar am Rahmen des Mähdreschers angelenkt, so dass sie durch einen Hebel nach vorn in eine Steinauswurfposition verschwenkt werden kann. Die Rückwand erstreckt sich etwa vom Schwenkpunkt der Vorderwand schräg nach hinten und oben bis zum Einlass des Dreschkorbs. Bei dieser Ausführungsform ist die Rückwand starr, aber lösbar mit dem Rahmen des Mähdreschers verbunden. Wenn die Vorderwand in die Steinauswurfposition verschwenkt wurde und die Rückwand von ihrer Befestigung gelöst ist, bleibt sie durch eine flexible Dichtung mit der Vorderwand eines Förderbodens für ausgedroschene Körner, der sich unterhalb der Dreschtrommel befindet, mit dem Rahmen des Mähdreschers verbunden. Die Rückwand kann somit nach vorn herausgezogen werden, um Zugang zu dem Förderboden und zum vorderen Bereich des Dreschkorbs zu erhalten.

Bei der zweiten Ausführungsform entspricht die Vorderwand der Steinfalle der ersten Ausführungsform, während die Rückwand um die Schwenkachse der Vorderwand schwenkbar angelenkt ist. Vorder- und Rückwand können unabhängig voneinander verschwenkt werden.

In der als gattungsbildend angesehenen EP 0 516 892 A ist eine Steinfalle beschrieben, die einen schwenkbar an Seitenwänden des Mähdreschers angelenkten Trog umfasst. Unterhalb des Trogs ist eine Inspektionsklappe mit ihrer Unterseite ebenfalls schwenkbar an Seitenwänden des Mähdreschers angelenkt.

Eine andere Steinfalle ist aus der US 4 446 875 A bekannt. Dort bilden Vorder- und Rückwand eine Wanne, die mit einer sich nach unten erstreckenden Wand verbunden ist, die an ihrem unteren Ende am Rahmen des Mähdreschers angelenkt ist. Die Wand und die Wanne können insgesamt herausgeschwenkt werden.

Die FR 2 141 075 A beschreibt einen Mähdrescher, bei dem unterhalb der Steinfalle eine Reinigungseinrichtung angeordnet ist, die mit einem unterhalb des Dreschkorbs angeordneten Förderboden verbunden ist und periodisch Löcher im Boden der Steinfalle zu Reinigungszwecken durchstößt. Zur Entleerung der Steinfalle ist diese abzunehmen.

Die Steinfallen gemäß EP 0 532 072 A und US 4 446 875 A weisen jeweils Vorderwände auf, die sich zwischen einem unteren Schwenkpunkt an der Vorderseite des Förderbodens (EP 0 532 072 A) oder noch darunter (US 4 446 875 A) und der Unterseite des Gehäuses des Schrägförderers erstrecken. Dadurch besteht die Möglichkeit, Zugang zum Förderboden zu erhalten, wenn die Vorderwand in die Steinauswurfposition verschwenkt ist. Als nachteilig ist aber anzusehen, dass sich ein relativ großer Hebelarm und Schwenkweg ergibt, so dass die gefüllte Steinfalle über einen geeigneten Hebelmechanismus mit entsprechender Übersetzung bewegt werden muss, um dem Bediener eine Verstellung mit angemessenem Krafteinsatz zu ermöglichen. Außerdem muss die Steinfalle und insbesondere ihre Schwenklagerung wegen dieses Hebelarms relativ massiv dimensioniert werden. Die Inspektionsklappe der EP 0 516 892 A ermöglicht erst einen problemlosen Zugang zum Dreschkorb, nachdem die Steinfalle komplett demontiert wurde, da diese ansonsten die obere Hälfte des Zwischenraums zwischen dem Schrägförderer und dem unteren Ende der Inspektionsklappe blockiert.

Die der Erfindung zu Grunde liegende Aufgabe wird darin gesehen, eine demgegenüber verbesserte Steinfalle bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Vorderwand der Steinfalle an der Oberseite der Förderbodeninspektionsklappe anzulenken. Die Förderbodeninspektionsklappe erstreckt sich von der Vorderseite des Förderbodens nach oben und ist an ihrer Unterseite um eine ebenfalls horizontal und quer zur Vorwärtsrichtung verlaufende Achse schwenkbar am Rahmen des Mähdreschers gelagert.

Zum Ausleeren der Steinfalle ist nur die Vorderwand der Steinfalle nach vorn in die Steinauswurfposition zu verschwenken. Die Schwenkachse befindet sich unmittelbar am unteren Ende der Vorderwand, so dass beim Verschwenken keine größeren Drehmomente auftreten und der Schwenkweg kurz ist. Besteht der Wunsch nach Zugang zum Förderboden, wird auch die Förderbodeninspektionsklappe nach vorn verschwenkt. Dabei wird auch die Vorderwand mit nach vorn verschwenkt, so dass ein hinreichender Zugang zum Förderboden möglich wird.

Die Förderbodeninspektionsklappe wird, solange sie nicht zwecks Schaffung einer Zugangsmöglichkeit zum Förderboden nach vorn verschwenkt ist, am Rahmen des Mähdreschers arretiert. Dazu können an ihren seitlichen Enden angeordnete Riegelelemente dienen. Sie bleibt somit etwa vertikal orientiert, auch wenn die Vorderwand zwischen Steinauswurfposition und Erntebetriebsposition bewegt wird.

Die Rückwand der Steinfalle erstreckt sich vorzugsweise von der Vorderseite des Dreschkorbs schräg nach vorn und unten bis zur Schwenklagerung der Vorderwand an der Inspektionsklappe. Sie kann flach oder mit beliebigen Krümmungen ausgeführt sein. Die Rückwand kann starr, beispielsweise mit Schrauben, jedoch lösbar am Rahmen des Mähdreschers befestigt werden, um sie zur Schaffung eines besseren Zugangs zum Förderboden oder zum Dreschkorb herausnehmen zu können. In einer anderen Ausführungsform ist sie schwenkbar an der Vorderwand, an der Inspektionsklappe oder am Dreschkorb angelenkt.

In den Zeichnungen ist ein nachfolgend näher beschriebenes Ausführungsbeispiel der Erfindung dargestellt. Es zeigt:
- Fig. 1: einen Mähdrescher in einer schematischen Seitenansicht,
- Fig. 2: eine seitliche Ansicht der Steinfalle des Mähdreschers aus Figur 1 in der Erntebetriebsposition, und
- Fig. 3: eine seitliche Ansicht der Steinfalle aus Figur 2 in der geöffneten Position, in der ein Zugang zum Förderboden möglich ist.

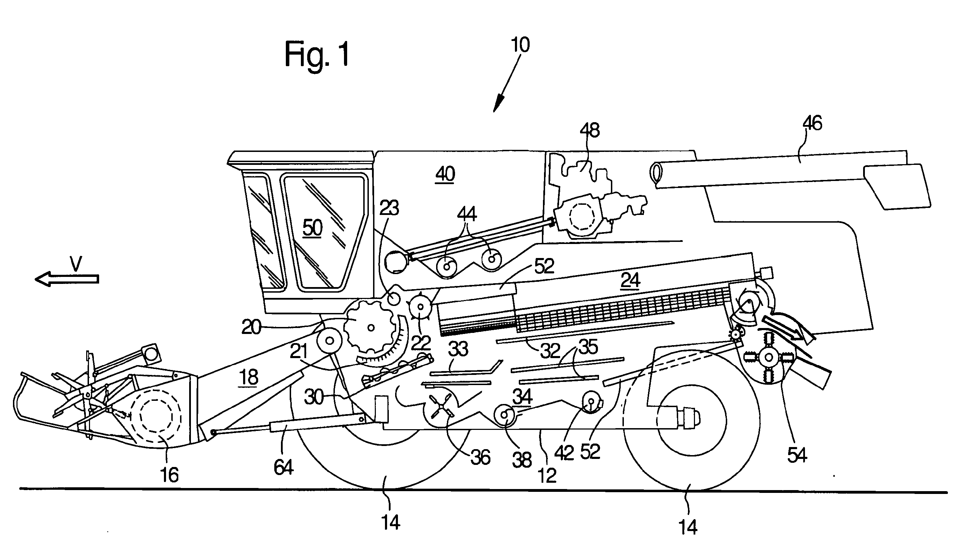

Die Figur 1 zeigt einen selbstfahrenden Mähdrescher 10 mit einem Rahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung in Form eines Schneidwerks 16 angeschlossen, um Erntegut von dem Feld zu ernten und es nach oben und hinten durch einen Schrägförderer 18 einem Dreschwerk zuzuführen. Das Dreschwerk umfasst eine quer angeordnete Dreschtrommel 20 und einen dieser zugeordneten Dreschkorb 21, denen das geerntete Gut zuerst zugeführt wird. Eine Abstreifrolle 23 und eine Wendetrommel 22 führen gemeinsam mit einem Zufuhrgehäuse das gedroschene Erntegut von der Dreschtrommel 20 und dem Dreschkorb 21 einem Axialabscheider 24 zu. Auch die Verwendung von Strohschüttlern als Abscheidemittel ist denkbar. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Förderboden 30, der sie einem Vorbereitungsboden 33 zuführt. Getreide und Spreu, die hingegen aus dem Axialabscheider 24 austreten, fallen auf einen Schüttelboden 32, der sie zur Weitergabe auf den Vorbereitungsboden 33 führt. Der Vorbereitungsboden 33 gibt das Getreide und die Spreu einer Reinigungseinrichtung 34 mit darin angeordneten Sieben 35 weiter, der ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu wird an der Rückseite der Reinigungseinrichtung 34 auf einen sich in einer Schwingbewegung befindlichen Schwingboden 52 ausgeworfen. Das gereinigte Getreide aus dem Korntank 40 kann durch ein Entladesystem mit Querschnecken 44 und einem Entladeförderer 46 entladen werden. Das vom Axialabscheider 24 an seiner Rückseite ausgeworfene Stroh wird gemeinsam mit der durch den Schwingboden 52 zugeführten Spreu durch einen Strohhäcksler 54 gehäckselt und auf dem Feld verteilt.

Die genannten Systeme werden mittels eines Verbrennungsmotors 48 angetrieben. Der Betrieb des Mähdreschers 10 wird von einer Bedienungsperson aus einer Fahrerkabine 50 heraus kontrolliert. Die verschiedenen Vorrichtungen zum Dreschen, Fördern, Reinigen und Abscheiden befinden sich innerhalb des Rahmens 12.

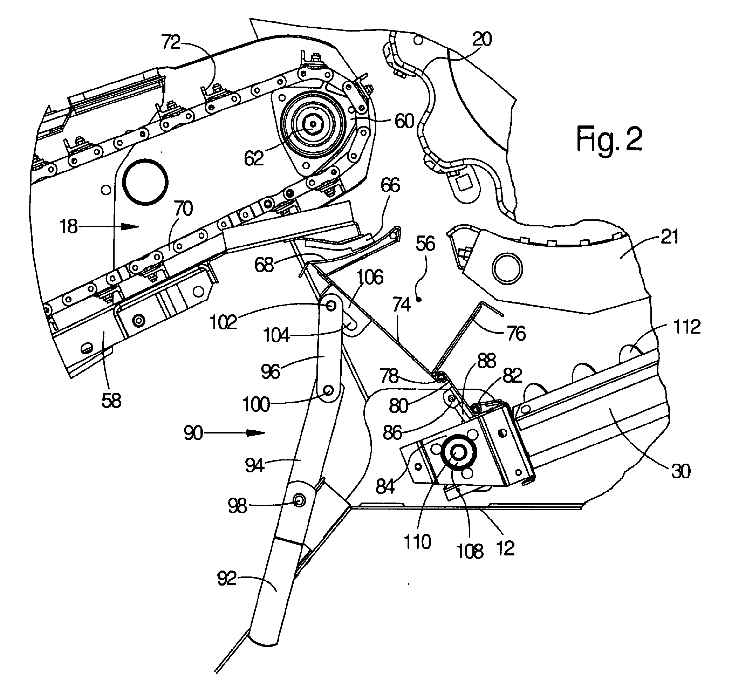

Die Figur 2 zeigt eine seitliche Ansicht einer insgesamt mit 56 gekennzeichneten Steinfalle und der benachbarten Bereiche des Mähdreschers 10. Der Schrägförderer 18 weist ein Gehäuse 58 auf, in dem eine obere Schrägfördererwalze 60 drehbar gelagert ist. Die horizontal und quer zur Fahrtrichtung verlaufende Drehachse 62 der oberen Schrägfördererwalze 60 entspricht gleichzeitig einer Schwenkachse, um die der Schrägförderer 18 am Rahmen 12 des Mähdreschers 10 schwenkbar angelenkt ist. Diese Schwenkbewegung wird durch Hydraulikzylinder 64 bewerkstelligt (s. Figur 1). Am hinteren Endbereich des unteren Teils des Gehäuses 58 weist der Schrägförderer 18 eine nach unten weisende Klappe mit einer Oberfläche 66 auf, die an einer mit dem Rahmen 12 verbundenen, nach oben gekrümmten Oberfläche 68 des Mähdreschers 10 zusammenwirkt, um bei einer Verschwenkung des Schrägförderers 18 um die Achse 62 eine Dichtung zu bilden. Um die obere Schrägfördererwalze 60 und eine nicht eingezeichnete untere Schrägfördererwalze läuft eine Förderkette 70 mit daran befestigten Mitnehmern 72 um, die das vom Schneidwerk 16 aufgenommene Erntegut unterschlächtig fördert. Die obere Schrägfördererwalze 60 und/oder die untere Schrägfördererwalze wird angetrieben.

Die Steinfalle 56 befindet sich unterhalb des Übergangsbereichs zwischen dem Auslass des Schrägförderers 18 und dem Einlass des Dreschwerks. Sie dient zur Aufnahme von Steinen, die unbeabsichtigt im Erntegut mitgeführt werden und durch die Schwerkraft direkt in sie fallen oder durch die Dreschtrommel 20 in sie hinein reflektiert werden. Die Steinfalle 56 wird durch eine Vorderwand 74 und eine Rückwand 76 nach unten hin umschlossen. In der in der Figur 2 dargestellten Erntebetriebsposition bilden die Vorderwand 74 und die Rückwand 76 ein V.

Die Vorderwand 74 ist an ihrer Unterseite an einem Schwenklager 78 angelenkt, so dass sie um eine horizontal und quer zur Vorwärtsrichtung verlaufende Achse verschwenkbar ist. Die Vorderwand 74 erstreckt sich somit in der dargestellten Erntebetriebsposition vom Schwenklager 78 schräg nach vorn und oben und liegt an der mähdrescherfesten Oberfläche 68 an. Bei einer anderen Ausführungsform könnte die Vorderwand auch direkt am Gehäuse 58 des Schrägförderers 18 anliegen, insbesondere an der nach unten gekrümmten Oberfläche 66, wobei eine flexible Dichtung zwischen der Vorderwand 74 und dem Schrägförderer 18 zur Anwendung käme.

Das Schwenklager 78 befindet sich an der Oberseite einer Förderbodeninspektionsklappe 80, die an ihrem unteren Ende durch eine weitere Schwenklagerung 82 am Rahmen 12 angelenkt ist. Die Schwenkachse der Schwenklagerung 82 erstreckt sich ebenfalls horizontal und quer zur Vorwärtsrichtung V. Die Schwenklagerung 82 ist an der Oberseite eines vorderen Rahmenteils 84 angebracht, das den Förderboden 30 abstützt. Das Rahmenteil 84 ist wiederum in nicht dargestellter Weise am Rahmen 12 abgestützt. Halterungen 86 an beiden seitlichen Enden der Förderbodeninspektionsklappe 80 haltern Riegelelemente 88, die seitlich verschoben und zur Arretierung der Förderbodeninspektionsklappe 80 in geeignete Öffnungen im Rahmen 12 eingeführt werden können, um die Förderbodeninspektionsklappe 80 in der dargestellten Position lösbar zu haltern.

Die Rückwand 76 erstreckt sich von der Schwenklagerung 78 der Vorderwand 74 schräg nach hinten und oben bis kurz vor das vordere Ende des Dreschkorbs 21. Sie ist starr, aber lösbar am Rahmen 12 befestigt, wozu an ihren seitlichen Enden beispielsweise Schraubverbindungen vorgesehen sind.

Zur Bewegung der Vorderwand 74 ist eine Hebelmechanik 90 vorgesehen, die sich aus einem Hebel 94 mit einem Handgriff 92 und einer Strebe 96 zusammensetzt. Der Hebel 94 ist an einer Schwenklagerung 98 an der Vorderseite des Rahmens 12 angelenkt, deren Schwenkachse horizontal und parallel zur Vorwärtsrichtung verläuft. Der Handgriff 92 befindet sich in der Erntebetriebsposition schräg vor und unterhalb der Schwenklagerung 98, während sich der mit dem Handgriff 92 starr verbundene Hebel 94 von der Schwenklagerung 98 schräg nach oben erstreckt. Er ist durch eine weitere Schwenklagerung 100 mit horizontal und quer zur Vorwärtsrichtung V verlaufender Achse an der Strebe 96 angelenkt, die an ihren anderen Ende wiederum mit einem Stift 102 in ein Langloch 104 in einer Konsole 106 an der Vorderseite der Vorderwand 74 eingreift. Das Langloch 104 erstreckt sich parallel zur Vorderwand 74. Anzumerken ist, dass der Handgriff 94 auch durch einen fremdkraftbetätigten Antrieb ersetzt werden könnte, damit der Bediener die Steinfalle 56 entleeren kann, ohne die Kabine 50 zu verlassen.

Die Funktionsweise der erfindungsgemäßen Steinfalle 56 ist folgendermaßen: Befindet sich der Hebel 94 in der in Figur 2 dargestellten Erntebetriebsposition, wird die Vorderwand 74 in ihrer Erntebetriebsposition gehalten. Eventuell vom Schrägförderer 18 mitgeführte Steine gelangen in die Steinfalle 56 und sammeln sich dort an. Soll die Steinfalle nach Ablauf einer gewissen Erntezeit entleert werden, bewegt der Bediener den Handgriff 92 im Uhrzeigersinn nach oben. Die Bewegung wird über den Hebel 94, die Schwenklagerung 100, die Strebe 96, den Stift 102 auf die Konsole 106 und die Vorderwand 74 übertragen, die (nachdem der durch das Langloch 104 resultierende Leerweg überwunden wurde) im Gegenuhrzeigersinn um die Schwenklagerung 78 nach unten in ihre Steinauswurfposition verschwenkt wird. Die Steine fallen dann aus der Steinfalle 56 heraus auf den Erdboden. Hierbei bleibt die Schwenklagerung 78 an Ort und Stelle, da die Förderbodeninspektionsklappe 80 durch die Riegelelemente 88 mit dem Rahmen 12 gekoppelt bleibt. Auch die Rückwand 76 bleibt stationär. Die Steinfalle 56 kann somit unproblematisch geleert werden, da nur die relativ kurze Vorderwand 74 bewegt werden muss. Anschließend kann sie durch Bewegen des Hebels 94 in umgekehrter Richtung geschlossen werden.

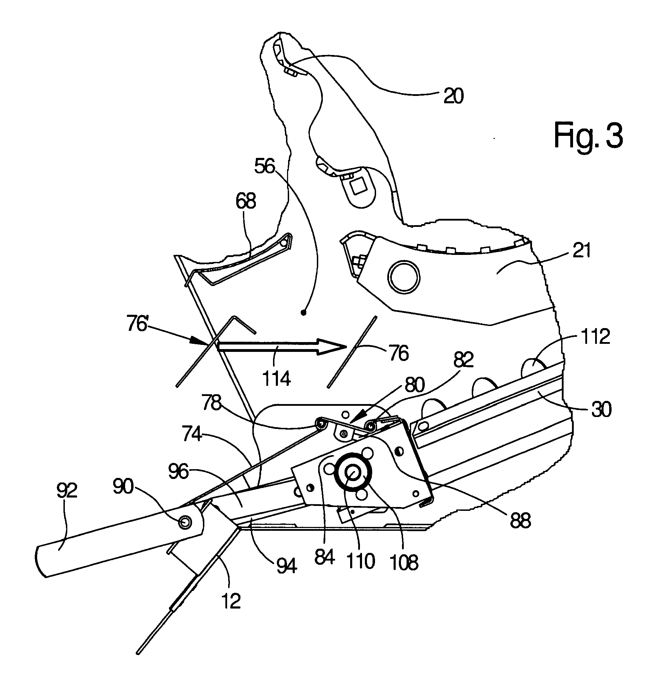

Besteht der Bedarf, Zugang zum vorderen Ende des Förderbodens 30 zu erhalten, beispielsweise um Lagerungen 108 einer Querwelle 110 zum Antrieb der Schneckenförderer 112 des Förderbodens 30 zu warten, oder zum Dreschkorb 21, löst der Bediener die Riegelelemente 88, was vor oder nach dem Verschwenken der Vorderwand 74 in die Steinauswurfposition erfolgen kann. Dadurch gelangt die Förderbodeninspektionsklappe 80 in die in Figur 3 dargestellte Position, sobald der Hebel 92 aus seiner Erntebetriebsposition im Uhrzeigersinn verschwenkt wurde. Das Langloch 104 stellt den für die Bewegung der Förderbodeninspektionsklappe 80 erforderlichen Bewegungsbereich bereit, da sich die Konsole 106 in der in Figur 3 dargestellten Position weiter vorn befindet, als wenn die Förderbodeninspektionsklappe 80 nicht verschwenkt wird. Die Rückwand 76 kann gelöst und entnommen werden, wie durch die abgenommene Rückwand 76' und den Pfeil 114 schematisch dargestellt ist. Nunmehr besteht ein unproblematischer Zugang zum Förderboden 30 und zur Unter- und Vorderseite des Dreschkorbs 21. Nach Beendigung der Arbeiten wird die Rückwand 76 wieder fixiert und die Vorderwand 74 und die Förderbodeninspektionsklappe 80 werden durch Betätigen des Hebels 94 wieder in die in Figur 2 dargestellte Position verbracht. Schließlich werden die Riegelelemente 88 wieder arretiert.

Im Ergebnis wird eine problemlose Entleerung der Steinfalle 56 und ein guter Zugang zum Förderboden 30 und zum Dreschkorb 21 ermöglicht.

## Patentansprüche

1. Mähdrescher (10) mit einem Schrägförderer (18), einer Dreschtrommel (20) und einem Dreschkorb (21), unter dem sich ein Förderboden (30) zur Förderung ausgedroschener Körner befindet, sowie einer unterhalb des Übergangsbereichs zwischen Schrägförderer (18) und Dreschkorb (21) angeordneten Steinfalle (56), die eine Vorderwand (74) umfasst, welche an ihrem unteren Ende durch ein Schwenklager (78) um eine horizontal und quer zur Vorwärtsrichtung (V) verlaufende Achse in eine Steinauswurfposition verschwenkbar angelenkt ist und sich in einer Erntebetriebsposition von der Achse des Schwenklagers (78) nach oben erstreckt, wobei unterhalb des unteren Endes der Steinfalle (56) eine Förderbodeninspektionsklappe (80) vorhanden ist, die an ihrer Unterseite um eine horizontal und quer zur Vorwärtsrichtung verlaufende Achse an der Vorderseite des Förderbodens (30) schwenkbar am Rahmen (12) des Mähdreschers (10) angelenkt ist, so dass die Förderbodeninspektionsklappe (80) zwecks Schaffung eines Zugangs zum Förderboden (30) und/oder zum Dreschkorb (21) nach vorn verschwenkbar ist, **dadurch gekennzeichnet, dass** die Vorderwand (74) durch das Schwenklager (78) an der Oberseite der Förderbodeninspektionsklappe (80) schwenkbar angelenkt ist, so dass zwecks Schaffung eines Zugangs zum Förderboden (30) die Förderbodeninspektionsklappe (80) und die Vorderwand (74) gemeinsam um die Achse der Förderbodeninspektionsklappe (80) nach vorn verschwenkbar sind.

2. Mähdrescher (10) nach Anspruch 1, **dadurch gekennzeichnet, dass** die Förderbodeninspektionsklappe (80) am Rahmen (12) des Mähdreschers (10) arretierbar ist.

3. Mähdrescher (10) nach Anspruch 1 oder 2, **dadurch gekennzeichnet, dass** eine Rückwand (76) der Steinfalle (56) sich in der Erntebetriebsposition zwischen der Schwenkachse der Vorderwand (74) und der Vorderseite des Dreschkorbs (21) erstreckt.

4. Mähdrescher (10) nach einem der Ansprüche 1 bis 3, **dadurch gekennzeichnet, dass** die Rückwand (76) der Steinfalle (56) starr, aber lösbar, mit dem Rahmen (12) des Mähdreschers (10) verbindbar ist.

## Claims

1. Combine harvester (10) having a feeder house (18), a threshing drum (20) and a threshing concave (21), under which there is a conveying floor (30) for conveying threshed grains, and also having a stone trap (56) which is arranged beneath the transition region between the feeder house (18) and the threshing concave (21) and comprises a front wall (74) which is articulated at its lower end by a pivot bearing (78) such as to be pivotable about an axis that extends horizontally and transversely to the forward direction (V), and extends upwardly in a harvesting position from the axis of the pivot bearing (78), wherein beneath the lower end of the stone trap (56) there is a conveying floor inspection flap (80) which is articulated at its underside to the frame (12) of the combine harvester (10) such as to be pivotable about an axis, at the front side of the conveying floor (30), that extends horizontally and transversely to the forward direction, such that the conveying floor inspection flap (80) is pivotable forwards in order to create an access to the conveying floor (30) and/or to the threshing concave (21), **characterized in that** the front wall (74) is articulated in a pivotable manner to the top side of the conveying floor inspection flap (80) by the pivot bearing (78), such that the conveying floor inspection flap (80) and the front wall (74) are pivotable forwards jointly about the axis of the conveying floor inspection flap (80) in order to create an access to the conveying floor (30).

2. Combine harvester (10) according to Claim 1, **characterized in that** the conveying floor inspection flap (80) is lockable to the frame (12) of the combine harvester (10).

3. Combine harvester (10) according to Claim 1 or 2, **characterized in that** a rear wall (76) of the stone trap (56) extends in the harvesting position between the pivot axis of the front wall (74) and the front side of the threshing concave (21).

4. Combine harvester (10) according to one of Claims 1 to 3, **characterized in that** the rear wall (76) of the stone trap (56) is connectable in a rigid, but releasable, manner to the frame (12) of the combine harvester (10).

## Revendications

1. Moissonneuse-batteuse (10), comprenant un transporteur incliné (18), un tambour de battage (20) et un contre-batteur (21) en dessous duquel se situe un fond transporteur (30) pour le transport de grains battus, ainsi qu'un épierreur (56) disposé en dessous de la zone de transition entre le transporteur incliné (18) et le contre-batteur (21), lequel épierreur comporte une paroi avant (74) qui est articulée à son extrémité inférieure au moyen d'un palier de pivotement (78), de manière à pouvoir pivoter, autour d'un axe s'étendant horizontalement et transversalement à la direction d'avance (V), dans une position d'éjection de pierres, et s'étend vers le haut à partir de l'axe du palier de pivotement (78) dans une position de mode de récolte, une trappe d'inspection de fond transporteur (80) étant prévue en dessous de l'extrémité inférieure de l'épierreur (56), laquelle trappe d'inspection est, au niveau de son côté inférieur, articulée sur le cadre (12) de la moissonneuse-batteuse (10) de manière à pouvoir pivoter autour d'un axe s'étendant horizontalement et transversalement à la direction d'avance au niveau du côté avant du fond transporteur (30), de telle sorte que la trappe d'inspection de fond transporteur (80) puisse être pivotée vers l'avant en vue d'obtenir un accès au fond transporteur (30) et/ou au contre-batteur (21), **caractérisée en ce que** la paroi avant (74) est articulée de manière pivotante, au moyen du palier de pivotement (78), au niveau du côté supérieur de la trappe d'inspection de fond transporteur (80), de telle sorte qu'en vue d'obtenir un accès au fond transporteur (30), la trappe d'inspection de fond transporteur (80) et la paroi avant (74) puissent pivoter conjointement vers l'avant autour de l'axe de la trappe d'inspection de fond transporteur (80).

2. Moissonneuse-batteuse (10) selon la revendication 1, **caractérisée en ce que** la trappe d'inspection de fond transporteur (80) peut être verrouillée sur le cadre (12) de la moissonneuse-batteuse (10).

3. Moissonneuse-batteuse (10) selon la revendication 1 ou 2, **caractérisée en ce qu'**une paroi arrière (76) de l'épierreur (56) s'étend dans la position de mode de récolte entre l'axe de pivotement de la paroi avant (74) et le côté avant du contre-batteur (21).

4. Moissonneuse-batteuse (10) selon l'une quelconque des revendications 1 à 3, **caractérisée en ce que** la paroi arrière (76) de l'épierreur (56) peut être reliée rigidement, mais de manière amovible, au cadre (12) de la moissonneuse-batteuse (10).
